(19) Europäisches Patentamt
European Patent Office
Office européen des brevets

(11) Publication number: **0 150 845**
**B1**

(12) **EUROPEAN PATENT SPECIFICATION**

(45) Date of publication of patent specification: **07.03.90**

(21) Application number: **85100900.1**

(22) Date of filing: **29.01.85**

(51) Int. Cl.⁵: **C 08 K 13/02**, C 08 L 23/02 // (C08K13/02, 3:22, 3:34, 5:02, 5:15, 5:56)

# (54) Flame retardant polyolefin compositions.

(30) Priority: **30.01.84 US 574835**
**14.09.84 US 650482**

(43) Date of publication of application:
**07.08.85 Bulletin 85/32**

(45) Publication of the grant of the patent:
**07.03.90 Bulletin 90/10**

(84) Designated Contracting States:
**BE DE FR GB IT NL**

(56) References cited:
**FR-A-2 245 057**
**US-A-3 403 036**

**CHEMICAL ABSTRACTS, vol. 85, no. 18, 1st November 1976, page 51, no. 125078t, Columbus, Ohio, US; & JP - A - 76 14 946 (ALLIED CHEMICAL CORP.) 05-02-1976**
**J. TROITZSCH, Brandverhalten von Kunststoffen, Carl Hauser Verlag München Wien, p. 74, item 6.4.1 (1982)**

(73) Proprietor: **OCCIDENTAL CHEMICAL CORPORATION**
**P.O. Box 189**
**Niagara Falls New York 14302 (US)**

(72) Inventor: **Ilardo, Charles S.**
**151 Lorelee Drive**
**Tonawanda New York 14150 (US)**

(74) Representative: **Vossius & Partner**
**Siebertstrasse 4 P.O. Box 86 07 67**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 150 845 B1

## Description

This invention relates to flame retardant polyolefin compositions, having improved smoke retardant characteristics.

Polyolefin compositions are employed in a diversity of applications, including, for example, wire coatings, pipes, conduits, transportation products, marine products, fibers, coatings, industrial moldings, and various other products. These and other uses are often served better by polyolefin compositions that are flame retardant.

However, flame retardance as characterized, for example, by low burning rates, is only one of a number of fire-related hazards that may be exhibited by a given material. In recent years, the hazards associated with smoke generation during fires have been the subject of considerable concern, with the result that a need exists for polyolefin compositions that are not only flame retardant, but are resistant to smoke generation as well.

Accordingly, it is an object of this invention to provide flame retardant polyolefin compositions that not only have low burning rates, but also exhibit low smoke generation when in contact with flame.

In accordance with this invention, flame retardant polyolefin compositions having improved smoke suppressant properties comprise (1) a polyolefin polymer, (2) a compound of iron, (3) a compound of antimony, (4) a compound of magnesium, and (5) a chlorinated organic compound of the formula

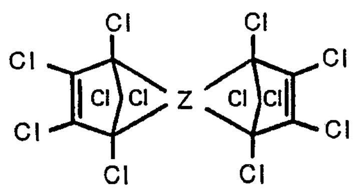

where Z is a tetravalent saturated cyclic radical having at least 4 carbon atoms which may be substituted by chlorine, bromine, fluorine or alkyl of 1 to 6 carbon atoms.

The polyolefin polymers employed in the flame retardant, low smoke compositions and coatings of this invention include high molecular weight polymers and resins as well as the intermediate molecular weight materials utilized for coatings and paints. The polymers embraced within the scope of this invention include, for example, the homopolymers, copolymers, and terpolymers of unsaturated aliphatic hydrocarbons such as ethylene, propylene, and butylene and the like as well as mixtures thereof. The preferred polyolefins are the polymers and copolymers of ethylene. In the flame retardant polymer compositions of this invention the polyolefin component is present in an amount of 25 to 75 percent by weight and preferably 40 to 60 percent by weight based on the total weight of the polymer composition. The polymer compositions can be in various physical forms, such as shaped articles, for example, moldings, sheets, rods, and the like; fibers, coatings, films and fabrics, and the like.

Illustrative of the chlorinated organic compounds which may be employed are the following:

The adduct, 1,2,3,4,6,7,8,9,13,13,14,14-dodecachloro-4,4a,4b,5,5a,6,9,9a,10,10a,11,11a-dodecahydro-1,4:5,10:6,9-trimethano-1H-benzo[b] fluorene, prepared by condensing two moles of hexachlorocyclopentadiene with one mole of dicyclopentadiene. The adduct has the assigned structure:

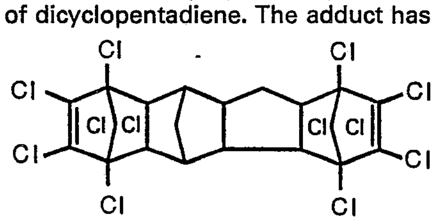

The adduct melts at about 277 to 278°C and has a vapor pressure of 5,8 Pa at 197°C.

The adduct 1,2,3,4,5,6,7,8,10,10,11,11-dodecachloro-1,4:5,8-dimethanofluorene, prepared by condensing two moles of hexachlorocyclopentadiene with one mole of cyclopentadiene. This adduct has the assigned structure

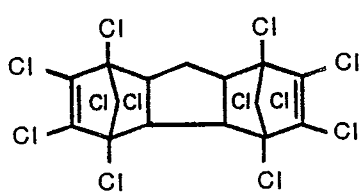

The adduct melts at about 319 to 322°C and has a vapor pressure of 4,1 Pa at 197°C.

The adduct 1,2,3,4,5,6,7,8,12,12,13,13-dodecachloro-1,4:5,8:9,10-trimethano-anthracene is prepared by condensing one mole of the Diels-Alder adduct of cyclopentadiene and acetylene with two moles of hexachlorocyclopentadiene. The resulting adduct has the assigned structure:

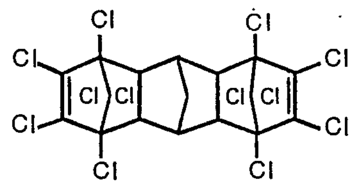

This adduct melts at about 340°C and has a vapor pressure of 1,1 Pa at 197°C.

The adduct, 1,2,3,4,6,7,8,9,10,10,11,11-dodecachloro-1,4,4a,5a,6,9,9a,9b-octahydro-1, 4:6,9-dimethano-dibenzofuran, prepared by condensing two moles of hexachlorocyclopentadiene and one mole of furan has the assigned structure

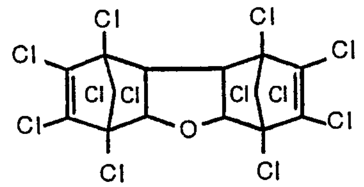

This adduct has a melting point of about 293°C. For convenience, this compound will be referred to by the shorter title of bis(hexachlorocyclopentadiene)furan.

The chlorinated organic compounds employed in the flame retardant compositions of this invention represent a known class of halgenated organic flame retardant compounds and are disclosed in further detail in U.S. Patents 3,403,036 and 3,687,983. Such compounds are typically prepared by condensation of two moles of a halogenated cyclopentadiene and one mole of a di-unsaturated cycloaliphatic compound such as 1,5-cyclooctadiene or a di-unsaturated heterocyclic compound containing oxygen as the hetero-ring atom constituent, such as furan.

The preferred chlorinated organic component of the flame retardant compositions of this invention is a Diels-Alder adduct of chlorinated cyclopentadiene and 1,5-cyclooctadiene having a melting point of about 350°C, a vapor pressure of about 0,8 Pa at 197°C and a chlorine content of at least about 65 percent. Suitable compounds are described in detail in U.S. Patents 3,403,036 and 4,000,114. The compound may be prepared by adducting (Diels-Alder reaction) one mole of 1,5-cyclooctadiene and two or more moles of hexachlorocyclopentadiene, in xylene at below about 200°C.

Further details regarding the preparation of this adduct, known as 1,2,3,4,7,8,9,10,13,13,14,14-dodeca-chloro-1,4,4a,5,6,6a,7,10,10a,11,12,12a-dodecahydro-1,4:7,10-dimethanodibenzo[a,e]cyclooctene, are disclosed by Ziegler and Froitzheim-Kuhlhorn, Annalen, vol. 589, page 157 (1954). The adduct is characterized by the structural formula

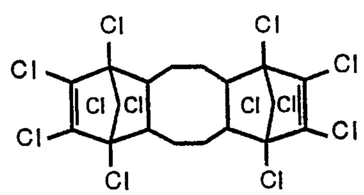

For convenience this compound will be referred to by the shorter title of bis(hexachlorocyclopentadieno)-cyclooctane.

The chlorinated organic compound is typically incorporated in the compositions of this invention, in an amount of about 2 to about 50 percent by weight and preferably about 10 to about 35 percent by weight, based on the total weight of the polyolefin composition.

Various antimony compounds may be employed in the compositions of the present invention, the preferred being antimony oxide. Other suitable antimony compounds that may be employed include the sulfides of antimony, salts of the alkali metals of Group 1 of the Periodic Table, antimony salts of organic acids and their pentavalent derivatives and the esters of antimonius acids and their pentavalent derivatives. It is convenient to use sodium antimonite or potassium antimonite when it is desired to use an alkali metal salt of the antimony for compositions of this invention. U.S. Patent 2,996,528 discloses suitable antimony salts of organic acids and their pentavalent derivatives. Compounds of this class include antimony butyrate, antimony valerate, antimony caproate, antimony heptylate, antimony caprylate, antimony pelargonate, antimony caprate, antimony cinnate, antimony anisate, and their pentavalent dihalide derivatives. Likewise, the esters of antimonius acids and their pentavalent derivatives disclosed in U.S. Patent 2,993,924 such as tris(n-octyl) antimonite, tris(2-ethylhexyl) antimonite, tribenzyl antimonite, tris(betachloroethyl) antimonite, tris(betachloropropyl) antimonite, tris(betachloro-butyl) antimonite, and their pentavalent dihalide derivatives. Still other suitable organic antimony compounds are the cyclic antimonites such as trimethylol propane antimonite, pentaerythritol antimonite and glycerol antimonite. The antimony compound is employed in the polyolefin compositions of this invention in the amount of 1 to 30 and preferably 5 to 25 percent by weight, based on the weight of the total composition.

Various iron compounds may be employed in the smoke suppressant compositions of this invention the preferred being ferrocene. The iron component is preferably incorporated into the polyolefin composition by milling. Generally, for ease of mixing and distribution throughout the polyolefin composition, the iron component, as well as other additives, is preferably employed in the form of fine particles, such as 0.1 to 50 µm. The amount of iron component may vary considerably, but is in the range of 0.01 to 3.0 and preferably 0.05 to 0.3 weight percent based on the total weight of the polyolefin composition. Among the wide variety of iron compounds that may be employed are included, for example, ferric sulfate, ferric acetate, ferric formate, ferric borate, ferric tungstate, ferric vanadate, ferric molybdate, ferrous tungstate, ferric oxalate, ferric ferrocyanide, ferric chloroendate, ferric hexachloronorbornene carboxylate, ferrous hydroxide, ferrous sulfate, ferrous tartrate, ferrous stannate, ferrous chloride, ferrous ammonium sulfate, and the like.

Other iron compounds useful in the compositions of this invention are the metal or metalloxy beta-ketoenolates of the formula:

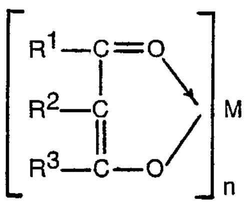

in which M is an iron ion, an ironoxy ion, or an iron hydroxy ion, in which n is an integer equal to the valence of the iron, ironoxy ion or iron hydroxy ion, in which each of $R^1$ and $R^3$ is a substituent selected from the group consisting of hydrogen and an organic substituent selected from alkyl, aryl, cycloalkyl, aralkyl, alkaryl, alkoxy, and aryloxy having one to eight carbon atoms and wherein each aryl substituent is carbocyclic, and in which $R^2$ is selected from the group consisting of $R^1$, $R^3$, halogen, nitro, and sulfo. Typical beta-ketoenolates are the ferrous or ferric acetylacetonates.

Other soluble iron compounds include the iron carboxylates, particularly derivatives of carboxylic acids for example of 3 to 22 carbon atoms. Illustrative iron carboxylates are iron acrylate, iron oleate, iron naphthenate, iron stearate, iron laurate, iron linoleate, and the like.

Also useful in the compositions of the invention are the iron oxides, such as $Fe_2O_3$ (yellow and red iron oxide), $Fe_3O_4$ and FeO.

Other iron compounds which may have desirable fire retardant properties but which adversely affect the stability or the cure of the polymer compositions can be employed if such iron compounds are used in an inactive form such as encapsulated or reacted or complexed with another compound. Such iron compounds include, for example, ferric chloride and ferric oxychloride. These compounds can be encapsulated with gelatin or other polymeric materials and incorporated into the polyolefin composition in that form.

A wide variety of non-basic compounds may be employed in the smoke suppressant of this invention. Typical compounds include, for example, magnesium chloride, magnesium phosphate, magnesium silicate, magnesium stearate, magnesium antimonide, magnesium aluminate, magnesium borate, and the like and mixtures thereof. However, "basic" magnesium compounds, that is, compounds which form basic solutions or slurries when mixed with water, are not suitable. It has been found that such "basic" magnesium compounds interfere with the traditional halogen/antimony flame retardance. The magnesium compound may also be employed in the form of a magnesium bearing mineral, such as, spinel ($MgO \cdot Al_2O_3$), serpentine ($3MgO \cdot 2SiO_2 \cdot 2H_2O$), talc ($3MgO \cdot 4SiO_2 \cdot H_2O$), sapphire ($5MgO \cdot 6A_2O_3 \cdot 2SiO_2$), bronzite (Mg, Fe)$SiO_2$, diopside ($CaMg(SiO_2)_2$), monticellite ($MgCaSi_4$), montmorillonite (Mg, Ca)$0 \cdot Al_2O_3 \cdot 5SiO_2 \cdot 5O7\ H_2O$), and the like and mixtures thereof. The preferred magnesium compound, based on availability, effectiveness, and economic considerations, is talc. The preferred form of talc, based on effectiveness, is zinc stearate coated talc. The amount of magnesium compound may vary considerably, but is in the range of 5 to 50 and preferably 20 to 40 weight percent based on the total weight of the polyolefin composition.

The following specific examples are provided to further illustrate this invention and the manner in which it may be carried out. It will be understood, however, that the specific details given in the examples have been chosen for purpose of illustration and are not to be construed as a limitation on the invention. In the examples, unless otherwise indicated, all parts and percentages are by weight and all temperatures are in degrees Celsius.

Examples 1—7

A low density cross-linkable polyethylene (DYNH-1, Union Carbide Corporation) was banded on a two roll rubber mill, operated at 130°—135°C. To the banded polyethylene was added varying amounts of bis(hexachlorocyclopentadieno) cyclooctane antimony oxide, dicumyl peroxide, talc, antioxidant and an iron compound. (Examples 2, 3, 5, 6 and 7 are provided for comparative purposes. In Examples 2 and 3 other commercially available halogenated organic flame retardants were substituted for the chlorinated organic component of the present invention. In Example 5, the iron compound was omitted. In Example 6, the magnesium compound was omitted. In Example 7, both the magnesium and iron compounds were

omitted.) Mixing was continued until the composition was uniform. The milled sheet was granulated and the granules compression molded at 160°C for 0.5 hours to form plaques 6 of about 40 $cm^2$ having a thickness of 3,175 mm or 1,905 mm. The plaques were tested for Oxygen Index following the procedures of ASTM—D—2863—30; and for smoke properties following the procedure of ASTM—E—662—79, with the results as shown in Table 1.

TABLE I

| Example | 1 | 2 | 3 | 4 | 5 | 6 | 7 |
|---|---|---|---|---|---|---|---|
| Composition (parts by wt.) Cross-linkable polyethylene[1] | 47.7 | 47.7 | 47.7 | 47.8 | 47.9 | 67.9 | 68.0 |
| Bis(hexachlorocyclo-pentadieno)cyclooctane | 25.0 | — | — | 25.0 | 25.0 | 25.0 | 25.0 |
| Decabromo-diphenyl oxide | — | 16.7 | — | — | — | — | — |
| Ethylene bis tetrabromophthalimide | — | — | 16.7 | — | — | — | — |
| $Sb_2O_3$ | 5.0 | 3.3 | 3.3 | 5.0 | 5.0 | 5.0 | 5.0 |
| Talc (coated with Zinc Stearate) | 20.0 | 30.0 | 30.0 | 20.0 | 20.0 | — | — |
| Polymerized 1,2-dihydro-2,2,4-trimethyl quinoline[2] | 0.7 | 0.7 | 0.7 | 0.7 | 0.7 | — | — |
| Dicumyl peroxide | 1.4 | 1.4 | 1.4 | 1.4 | 1.4 | 2.0 | 2.0 |
| Ferrocene | 0.2 | 0.2 | 0.2 | — | — | — | — |
| Ferric oxide | — | — | — | 0.1 | — | 0.1 | — |
| Oxygen Index | 28.6 | 28.4 | 28.4 | 27.4 | 26.3 | 24.1 | 24.0 |
| NBS Smoke, Flaming, $D_s4$ | 260 | 594 | 501 | 263 | 299 | 449 | 623 |
| $D_{max}$ | 310 | 657 | 535 | 296 | 332 | 615 | 766 |

[1]DYNH-1, a commercially available low density polyethylene, Union Carbide Corporation.
[2]A commercially available anti-oxidant

Examples 8—19

The general procedure of Examples 1—7 was repeated with the polyolefin and other components and amounts being varied as shown in Table II. Example 19, utilizing a basic compound, is included for comparative purposes.

TABLE II

| Examples | 8 | 9 | 10 | 11 | 12 | 13 | 14 | 15 | 16 | 17 | 18 | 19 |
|---|---|---|---|---|---|---|---|---|---|---|---|---|
| Composition (Parts by Weight) | | | | | | | | | | | | |
| Flame Retardant Cross-linkable Polyethylene[1] | 100 | — | — | | — | — | — | — | — | — | — | — |
| Diene-modified ethylenepropylene copolymer[2] | — | 47.7 | — | — | — | — | — | — | — | — | — | — |
| Ethylene-ethyl acrylate copolymer[3] | — | — | 47.7 | — | — | — | 47.7 | 50.7 | 53.7 | — | — | — |
| Polyethylene vinyl acetate[4] | — | — | — | 47.7 | 47.7 | 50.7 | — | — | — | 47.7 | 47.7 | 47.7 |
| Bis(hexachlorocyclopentadieno)cyclooctane | — | 25.0 | 25.0 | 25.0 | — | — | — | — | — | 25.0 | 25.0 | 25.0 |
| Bis(hexachlorocyclopentadieno)furan | — | — | — | — | 25.0 | 22.5 | 25.0 | 22.5 | 20.0 | — | — | — |
| $Sb_2O_3$ | — | 5.0 | 5.0 | 5.0 | 5.0 | 4.5 | 5.0 | 4.5 | 4.0 | 5.0 | 5.0 | 5.0 |
| Talc (coated with Zinc Stearate) | — | 20.0 | 20.0 | 20.0 | 20.0 | 20.0 | 20.0 | 20.0 | 20.0 | — | — | — |
| Talc (uncoated) | — | — | — | — | — | — | — | — | — | 20.0 | — | — |
| Anhydrous Magnesium sulfate | — | — | — | — | — | — | — | — | — | — | 20.0 | — |
| Magnesium Carbonate | — | — | — | — | — | — | — | — | — | — | — | 20.0 |
| Ferrocene | — | 0.2 | 0.2 | 0.2 | 0.2 | 0.2 | 0.2 | 0.2 | 0.2 | 0.2 | 0.2 | 0.2 |
| Polymerized 1,2-dihydro-2,2,4-trimethyl quinoline | — | 0.7 | 0.7 | 0.7 | 0.7 | 0.7 | 0.7 | 0.7 | 0.7 | 0.7 | 0.7 | 0.7 |
| Dicumyl peroxide | — | 1.4 | 1.4 | 1.4 | 1.4 | 1.4 | 1.4 | 1.4 | 1.4 | 1.4 | 1.4 | 1.4 |
| Oxygen Index | 28.0 | 27.9 | 27.1 | 27.5 | 30.5 | 28.8 | 30.2 | 29.2 | 28.9 | 29.6 | 28.2 | 28.2 |
| NBS Smoke, Flaming $D_s4$ | 318 | 370 | 151 | 216 | 291 | 292 | 253 | 246 | 272 | 375 | 396 | 523 |
| $D_{max}$ | 472 | 413 | 214 | 343 | 309 | 308 | 272 | 262 | 288 | 407 | 453 | 562 |

[1]Polycure 780, a flame retardant chemically cross-linkable polyethylene, specific gravity 1.24, commerciallv available from Reichhold Chemicals, Inc.
[2]Nordel 2722, a hexadiene modified ethylene propylene copolymer; specific gravity 0.88, commercially available from E. I. duPont deNemours & Co.
[3]Bakelite® DPD—6169 ethylene-ethyl acrylate copolymer commercially available from Union Carbide Corporation
[4]Ultrathane® 637, polyethylene vinyl acetate commercially available from U.S.I.

**Claims**

1. A flame retardant polymer composition comprising, in percent by weight, (1) 25 to 75 percent of a polyolefin, (2) 0.01 to 3,0 percent of a compound of iron, (3) 1,0 to 30 percent of a compound of antimony, (4) 5,0 to 50 percent of a non-basic compound of magnesium, and (5) 2,0 to 50 percent of a chlorinated organic compound of the formula

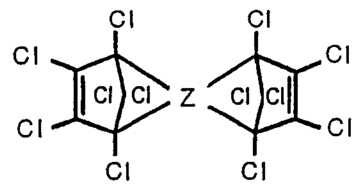

wherein Z is a tetravalent saturated cyclic radical having at least 4 carbon atoms which may be substituted by chlorine, bromine, fluorine or alkyl or 1 to 6 carbon atoms.

2. A flame retardant polymer composition according to Claim 1 wherein the chlorinated organic compound is of the formula

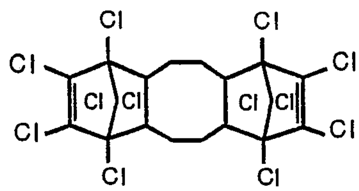

3. A composition according to Claim 1 wherein the chlorinated organic compound is of the formula

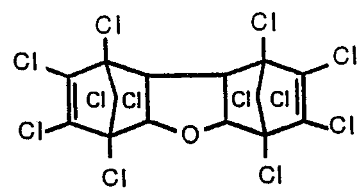

4. A composition according to Claim 1, 2 or 3 wherein the compound of antimony is antimony trioxide.

5. A composition according to Claim 1 or 2 wherein the compound of iron is ferric oxide.

6. A composition according to Claim 1, 2 or 3 wherein the compound of iron is ferrocene.

7. A composition according to Claim 1, 2 or 3 wherein the compound of magnesium is talc.

8. A composition according to Claim 1 or 2 wherein the polyolefin is polyethylene.

9. A composition according to Claim 1 or 2 wherein the polyolefin is a copolymer of ethylene and ethylacrylate, a copolymer of the ethylene and vinyl acetate or a copolymer of ethylene and propylene.

10. A composition according to Claim 7 wherein the talc is coated with zinc stearate.

11. A composition according to Claim 2 comprising, in percent by weight, about 2.0 to 50 percent of said chlorinated organic compound, 1.0 to 30 percent of antimony oxide, 0.01 to 3.0 percent ferrocene, 5.0 to 50 percent of talc, and 25 to 75 percent of polyolefin.

**Patentansprüche**

1. Flammverzögernde Polymer-Zusammensetzung, umfassend, in Gew.-%, (1) 25 bis 75% eines Polyolefins, (2) 0,01 bis 3,0% einer Eisenverbindung, (3) 1,0 bis 30% einer Antimonverbindung, (4) 5,0 bis 50% einer nicht-basischen Magnesiumverbindung, und (5) 2,0 bis 50% einer chlorierten organischen Verbindung der Formel

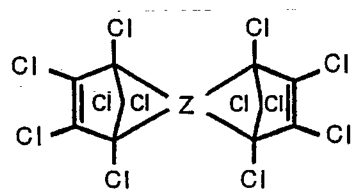

in der Z einen vierwertigen gesättigten cyclischen Rest mit mindestens 4 Kohlenstoffatomen bedeutet, die durch Chlor, Brom, Fluor oder Alkylreste mit 1 bis 6 Kohlenstoffatomen substituiert sein können.

2. Flammverzögernde Polymer-Zusammensetzung nach Anspruch 1, wobei die chlorierte organische Verbindung die Formel

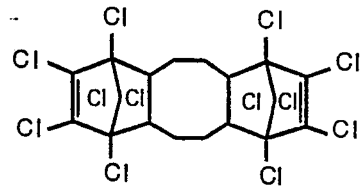

aufweist.

3. Zusammensetzung nach Anspruch 1, wobei die chlorierte organische Verbindung die Formel

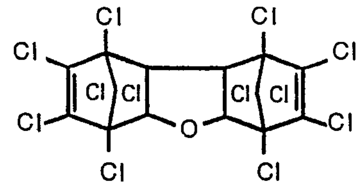

aufweist.

4. Zusammensetzung nach den Ansprüchen 1, 2 oder 3, wobei die Antimonverbindung Antimon-Trioxid ist.

5. Zusammensetzung nach den Ansprüchen 1 oder 2, wobei die Eisenverbindung Eisen(III)-oxid ist.

6. Zusammensetzung nach den Ansprüchen 1, 2 oder 3, wobei die Eisenverbindung Ferrocen ist.

7. Zusammensetzung nach den Ansprüchen 1, 2 oder 3, wobei die Magnesiumverbindung Talk ist.

8. Zusammensetzung nach den Ansprüchen 1 oder 2, wobei das Polyolefin Polyethylen ist.

9. Zusammensetzung nach den Ansprüchen 1 oder 2, wobei das Polyolefin ein Copolymerisat von Ethylen und Ethylacrylat, ein Copolymerisat von Ethylen und Vinylacetate oder ein Copolymerisat von Ethylen und Propylen ist.

10. Zusammensetzung nach Anspruch 7, wobei der Talk mit Zinkstearat beschichtet ist.

11. Zusammensetzung nach Anspruch 2, umfassend, in Gewichtsprozent, 2,0 bis 50% der chlorierten organischen Verbindung, 1,0 bis 30% Antimonoxid, 0.01 bis 3,0% Ferrocen, 5,0 bis 50% Talk und 25 bis 75% Polyolefin.

**Revendications**

1. Composition ignifugée à base de polymère comprenant, en pourcentages pondéraux, (1) 25 à 75% d'une polyoléfine, (2) 0,01 à 3,0% d'un composé du fer, (3) 1,0 à 30% d'un composé de l'antimoine, (4) 5,0 à 50% d'un composé non basique du magnésium, et (5) 2,0 à 50% d'un composé organique chloré de formule

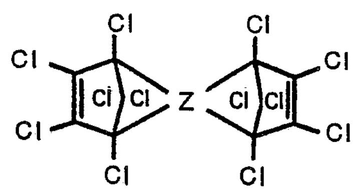

où Z est un radical cyclique saturé tétravalent comptant au moins 4 atomes de carbone qui peuvent être substitués par chlore, brome, fluor ou alcoyle de 1 à 6 atomes de carbone.

2. Composition ignifugée à base de polymère suivant la revendication 1, dans laquelle le composé organique chloré est de formule

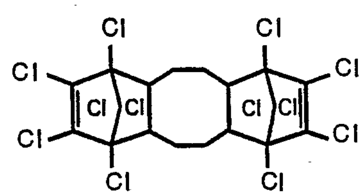

3. Composition suivant la revendication 1, dans laquelle le composé organique chloré est de formule

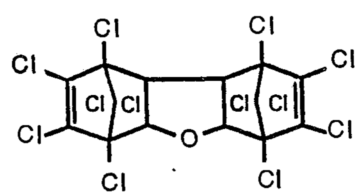

4. Composition suivant la revendication 1, 2 ou 3, dans laquelle le composé de l'antimoine est le trioxyde d'antimoine.

5. Composition suivant la revendication 1 ou 2, dans laquelle le composé du fer est l'oxyde ferrique.

6. Composition suivant la revendication 1, 2 ou 3, dans laquelle le composé du fer est le ferocène.

7. Composition suivant la revendication 1, 2 ou 3, dans laquelle le composé du magnésium est le talc.

8. Composition suivant la revendication 1 ou 2, dans laquelle la polyoléfine est le polyéthylène.

9. Composition suivant la revendication 1 ou 2, dans laquelle la polyoléfine est un copolymère d'éthylène et d'acrylate d'éthyle, un copolymère d'éthylène et d'acétate de vinyle ou un copolymère d'éthylène et de propylène.

10. Composition suivant la revendication 7, dans laquelle le talc est enrobé de stéarate de zinc.

11. Composition suivant la revendication 2, comprenant, en pourcentages pondéraux, 2,0 à 50% du composé organique chloré, 1,0 à 30% d'oxyde d'antimoine, 0.01 à 3,0% de ferrocène, 5,0 à 50% de talc et 25 à 75% de polyoléfine.